**Europäisches Patentamt**

**European Patent Office**

**Office européen des brevets**

(19)

(11) Veröffentlichungsnummer: **0 123 018**
**B1**

(12) # EUROPÄISCHE PATENTSCHRIFT

(45) Veröffentlichungstag der Patentschrift:
24.09.86

(21) Anmeldenummer: 84100696.4

(22) Anmeldetag: 24.01.84

(51) Int. Cl.⁴: **G 01 B 5/00**, G 01 B 3/00

(54) **Messsystem mit einer Einrichtung zur Fehlerkorrektur.**

(30) Priorität: 30.03.83 DE 3311562

(43) Veröffentlichungstag der Anmeldung:
31.10.84 Patentblatt 84/44

(45) Bekanntmachung des Hinweises auf die Patenterteilung:
24.09.86 Patentblatt 86/39

(84) Benannte Vertragsstaaten:
AT CH DE FR GB IT LI NL SE

(56) Entgegenhaltungen:
CH-A-353 903
DE-C-3 136 961

PATENTS ABSTRACTS OF JAPAN, Band 7, Nr. 67(P-184)(1212), 19. März 1983

(73) Patentinhaber: Dr. Johannes Heidenhain GmbH,
Nansenstrasse 17, D-8225 Traunreut (DE)

(72) Erfinder: Voelk, Karl-Hermann, Ludwig-Thoma-Strasse 1, D-8221 St. Georgen (DE)
Erfinder: Wehrstein, Karl-Heinz, Südring 19, D-8221 Palling (DE)

## Beschreibung

Die Erfindung betrifft ein Meßsystem mit einer Einrichtung zur Fehlerkorrektur gemäß dem Oberbegriff des Anspruchs 1.

Aus der DE-PS 31 36 981 ist ein Längenmeßsystem bekannt, bei dem zur Fehlerkorrektur ein Fehlerkorrekturprofil mittels Exzenter quer zur Meßrichtung einstellbar ist.

Der Druckschrift der Firma Dr. Johannes Heidenhain "Inkrementales Längenmeßsystem LS 107" Oktober 1982 entnimmt man ebenfalls ein Längenmeßsystem, bei dem zur Fehlerkorrektur ein Fehlerkorrekturprofil mittels Exzenter quer zur Meßrichtung einstellbar ist. Zur Einstellung des Fehlerkorrekturprofils weisen die Exzenter jeweils eine feste Justiermarke auf, denen eine feste Skala auf dem Gehäuse des Meßsystems zugeordnet ist.

Die zu korrigierenden Fehler setzen sich im allgemeinen aus Teilungsfehlern der Meßteilung des Meßsystems und aus Maschinenfehlern in Form von Führungsfehlern der Maschinenteile zusammen. Üblicherweise wird ein solches Meßsystem vor der Auslieferung beispielsweise mittels eines Laserinterferometers vermessen und gegebenenfalls vorhandene Teilungsfehler der Meßteilung werden durch Einstellen des Fehlerkorrekturprofils mittels der Exzenter korrigiert. Nach der Korrektur dieser Teilungsfehler wird im allgemeinen zumindest ein Teil der auf den Exzentern fest angeordneten Justiermarken von der Nullmarke der festen Skala abweichen. Nach dem Anbau dieses Meßsystems an einer Bearbeitungs- oder Meßmaschine müssen noch eventuell vorhandene Führungsfehler der zu messenden Maschinenteile ebenfalls durch Einstellen des Fehlerkorrekturprofils mittels der Exzenter korrigiert werden. Dei dieser Korrektur der Führungsfehler, beispielsweise anhand eines vorhandenen Fehlerprotokolls, erweist es sich aber als nachteilig, daß nicht alle Justiermarken der Exzenter der Nullmarke der festen Skala zugeordnet sind, so daß eine reproduzierbare Einstellung des Fehlerkorrekturprofils entsprechend dem Fehlerverlauf, auch bei späteren Neueinstellungen, schwierig und nicht immer fehlerfrei ist.

Der Erfindung liegt die Aufgabe zugrunde, bei einem Meßsystem der oben genannten Gattung eine reproduzierbare Fehlerkorrektur zu ermöglichen.

Diese Aufgabe wird erfindungsgemäß durch das kennzeichnende Merkmal des Anspruchs 1 gelöst.

Die mit der Erfindung erzielten Vorteile bestehen insbesondere darin, daß die vorgeschlagene Korrektureinrichtung mit einfachen Mitteln eine genau reproduzierbare Fehlerkorrektur erlaubt, bei der die einzelnen Fehlerkomponenten unabhängig voneinander unter vollständiger Ausnutzung der Justierskala korrigiert werden können.

Vorteilhafte Ausbildungen der Erfindung entnimmt man den abhägigen Ansprüchen.

Ausführungsbeispiele der Erfindung werden anhand der Zeichnung näher erläutert.

Es zeigen

Figur 1a, b eine ausschnittsweise Längsansicht und einen Querschnitt einer gekapselten Längenmeßeinrichtung;

Figur 2 einzelne Elemente einer Korrektureinrichtung und

Figur 3a, b einen Querschnitt und eine Draufsicht auf einen Exzenter mit Merkmalen der Erfindung.

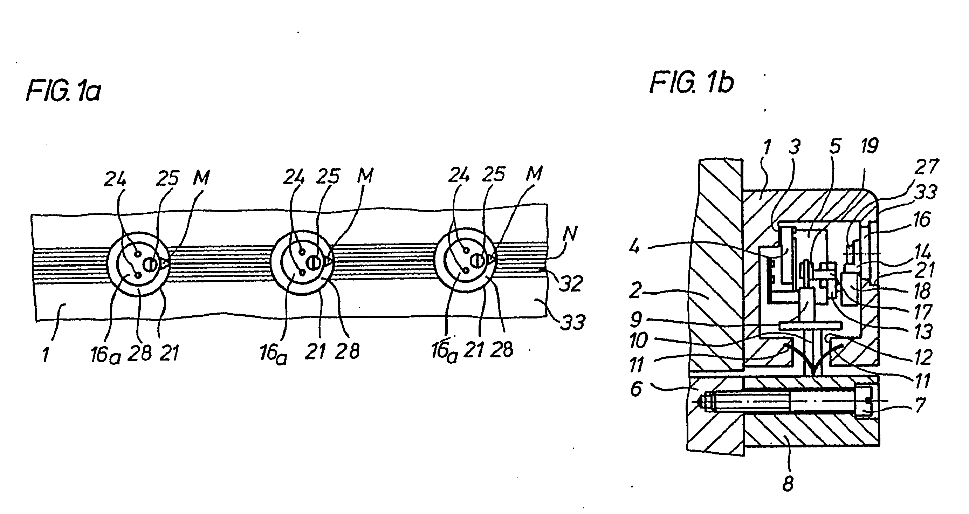

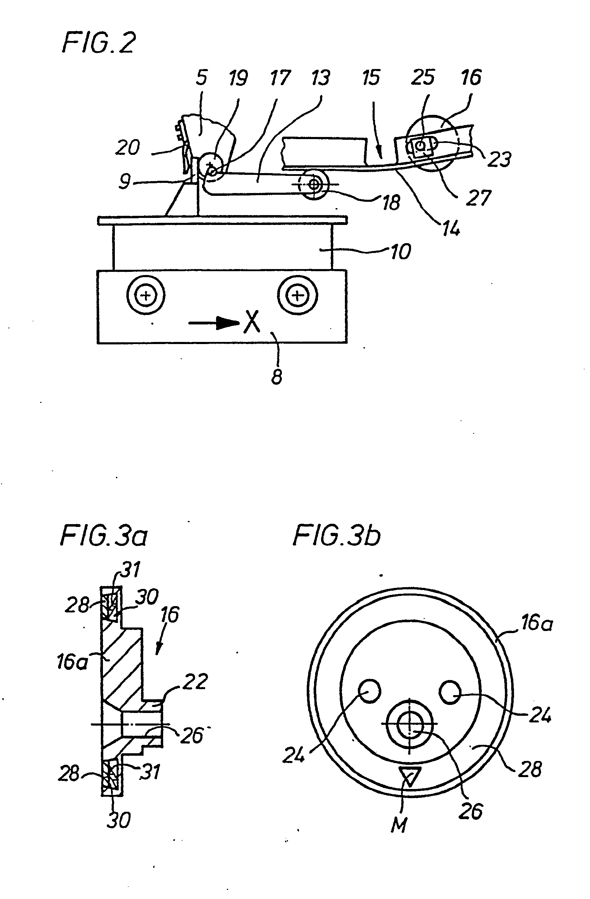

In Figur 1a, b ist in einer ausschnittsweisen Längsansicht und in einem Querschnitt eine gekapselte Längenmeßeinrichtung dargestellt, deren Gehäuse 1 in beliebiger Weise an einem Bett 2 einer Bearbeitungs- oder Meßmaschine befestigt ist. An einer Innenfläche des Gehäuses 1 ist mittels einer Klebeschicht 3 ein Maßstab 4 angebracht, dessen Teilung von einer Abtasteinheit 5 mit nicht dargestellten bekannten Mitteln abgetastet wird. An einem Schlitten 6 der Bearbeitungs- oder Meßmaschine ist mittels Schrauben 7 ein Montagefuß 8 befestigt, der einen Mitnehmer 9 mit einem schwertförmigen Mittelstück 10 aufweist, das durch einen mit dachförmig geneigten Dichtlippen 11 verschlossenen Längsspalt 12 in das Innere des Gehäuses 1 hineinragt. Die Relativbewegung des Schlittens 6 bezüglich des Betts 2 wird vom Mitnehmer 9 über einen Winkelhebel 13 (Figur 2) auf die Abtasteinheit 5 übertragen.

Zur Korrektur von Teilungsfehlern des Maßstabs 4 und von Führungsfehlern des Schlittens 6 bezüglich des Betts 2 weist die Längenmeßeinrichtung eine Korrektureinrichtung auf, die im Inneren des Gehäuses 1 angeordnet ist. Ein einstückiges winkelförmiges Fehlerkorrekturprofil 14 weist in bestimmten Abständen Querschnittsverringerungen 15 auf, in deren Nähe sich jeweils Verstellelemente 16 in Form von Exzentern befinden, mit denen das Fehlerkorrekturprofil 14 durch Auslenkung aus X entsprechend dem Fehlerverlauf einstellbar ist. Der Winkelhebel 13 ist um eine Achse 17 schwenkbar in der Abtasteinheit 5 gelagert und weist an seinem längeren freien Ende eine Rolle 18 auf, die bei einer Verschiebung der Abtasteinheit 5 in Meßrichtung X dem Linienzug des Fehlerkorrekturprofils 14 folgt und eine Schwenkbewegung des Winkelhebels 13 bewirkt, die dem zu korrigierenden Fehlerverlauf entspricht. Die Fehlerkorrektur erfolgt über einen am kürzeren freien Ende des Winkelhebels 13 angeordneten Exzenter 19, der am Mitnehmer 9 mittels einer Feder 20 anliegt und die Schwenkbewegung des Winkelhebels 13 in eine Relativbewegung zwischen der Abtasteinheit 5 und dem Mitnehmer 9 umsetzt.

Der Exzenter 16 besteht aus einer in einer Bohrung 21 in einer Wandung 33 des Gehäuses 1 drehbaren Exzenterscheibe 16a mit einem exzentrisch angeordneten Vorsprung 22 (Figur 3a, b), der in ein Langloch 23 des Fehlerkorrekturprofils 14 zu dessen Auslenkung eingreift. Zur Drehung des Exzenters 16 zwecks Einstellung des Fehlerkorrekturprofils 14 sind in der Exzenterscheibe 16a zwei von außen zugängliche Vertiefungen 24 zum Eingriff eines Drehwerkzeugs vorgesehen. Nach der erfolgten Einstellung des Fehlerkorrekturprofils 14 entsprechend dem vorliegenden Fehlerverlauf wird das Fehlerkorrekturprofil 14 mittels einer Schraube 25 in einer Bohrung 26 durch den exzentrischen Vorsprung 22 und mittels einer Mutter 27 in seiner Lage im Gehäuse 1 fixiert; ein Schenkel des Fehlerkorrekturprofils 14 dient dabei als Verdrehsicherung für die Mutter 27. Da sich bei der Einstellung des Fehlerkorrekturprofils 14 infolge der Auslenkungen durch die Exzenter 16 Längenänderungen ergeben, sind die Langlöcher 23 vorgesehen, die Längsverschiebungen des gesamten Fehlerkorrekturprofils 14 ermöglichen. Ein Ende des Fehlerkorrekturprofils 14 ist in bekannter, nicht dargestellter Weise bezüglich des Messungsnullpunktes festgelegt.

Auf der Exzenterscheibe 16a ist zur reproduzierbaren Fehlerkorrektur ein ringförmiger Markenträger 28 mit einer Justiermarke M vorgesehen, der in einer kegelförmigen Ringnut 30 der Exzenterscheibe 16a eingesetzt ist und mittels einer Tellerfeder 31 gegen die Öffnung der Ringnut 30 gedrückt und in dieser Lage fixiert wird. Die Justiermarke M ist einer Nullmarke N einer Skala 32 auf einem Skalenträger 33 in Form der die Exzenterscheiben 16a aufweisenden Wandung des Gehäuses 1 zugeordnet. Nach dem Einstellen des Fehlerkorrekturprofils 14 mittels der Exzenter 16 zur Korrektur von Teilungsfehlern der Teilung des Maßstabs 4 wird im allgemeinen wenigstens ein Teil der Justiermarken M von der Nullmarke N abweichen. Zum nachfolgenden Einstellen des Fehlerkorrekturprofils 14 mittels der Exzenter 16 zur Korrektur von Führungsfehlern der Maschinenteile 2, 6 werden die von der Nullmarke N abweichenden Justiermarken M durch Eindrücken und Drehen der betreffenden Markenträger 28 wieder der Nullmarke N zugeordnet, so daß eine genaue reproduzierbare Korrektur der Führungsfehler, beispielsweise anhand eines vorhandenen Fehlerprotokolls, unter vollständiger Ausnutzung der Skala 32 zu beiden Seiten der Nullmarke N erfolgen kann. Auch später eventuell notwendig werdende Neueinstellungen infolge zunehmenden Verschleisses der Maschinenführungen können in reproduzierbarer Weise vorgenommen werden. In besonders einfacher Weise kann der Markenträger auch aus einer wiederabziehbaren selbstklebenden Ringscheibe beispielsweise aus Metall bestehen.

## Patentansprüche

1. Meßsystem mit einer Einrichtung zur Korrektur von Fehlern, insbesondere von Teilungsfehlern und/oder Maschinenfehlern, mit einer Meßteilung und einer die Meßteilung abtastenden Abtasteinheit (5) an zwei relativ zueinander verschieblichen Objekten (2, 6), mit einem quer zur Meßrichtung mittels wenigstens eines Verstellelements (16) einstellbaren, in Meßrichtung verlaufenden Fehlerkorrekturprofil (14), wobei eine Justiermarke (M) eines Markenträgers (28) auf dem Verstellelement (16) einer Skala (32) eines Skalenträgers (33) zugeordnet ist, und mit einem Übertragungselement (13) zwischen dem Fehlerkorrekturprofil (14), der Abtasteinheit (5) und einem der vorgenannten Objekte, dadurch gekennzeichnet, daß der Markenträger (28) und das Verstellelement (16) relativ zueinander verstellbar sind.

2. Meßsystem nach Anspruch 1, dadurch gekennzeichnet, daß der Markenträger (28) als Klemmring in einer kegelförmigen Ringnut (30) des Verstellelements (16) drehbar und fixierbar angeordnet ist.

3. Meßsystem nach Anspruch 1, dadurch gekennzeichnet, daß der Markenträger aus einer selbstklebenden Ringscheibe besteht.

## Claims

1. Measuring system having an arrangement for the correction of errors, in particular of graduation errors and/or machine errors, with a scale graduation and a scanning unit (5) scanning the scale graduation at two objects (2,6) which are displaceable relative to one another having an error correction section (14), which is adjustable transversely to the measurement direction by means of at least one adjusting element (16) and which extends in the measurement direction, wherein an adjustment mark (M) of a mark carrier (28) on the adjustment element (16) is associated with a scale (32) of a scale carrier (33), and having a transmission element (13) between the error correction section (14), the scanning unit (5) and one of the said objects, characterized in that the mark carrier (28) and the adjustment element (16) are displaceable relative to one another.

2. Measuring system according to Claim 1, characterized in that the mark carrier (28) is rotatably and fixably disposed as a clamping ring in a conical annular groove (30) of the adjustment element (16).

3. Measuring system according to Claim 1, characterized in that the mark carrier consists of a self-adhesive annular disc.

## Revendications

1. Système de mesure comprenant un dispositif pour la correction d'erreurs, en particulier d'erreurs de graduation et/ou d'erreurs de machine, une graduation de mesure et un dispositif d'exploration (5) explorant la graduation de mesure, sur deux objets (2,6) mobiles en translation l'un par rapport à l'autre, un profil de correction d'erreurs (14) s'étendant dans la direction de mesure et réglable transversalement à la direction de mesure à l'aide d'au moins un élément de règlage (16), un repère d'ajustement (M) d'un porte-repére (28) sur l'élément de réglage (16) étant associé à une échelle (32) d'un porte-échelle (33), et un élément de transmission (13) entre le profil de correction d'erreurs (14), l'unité d'exploration (5) et l'un des objets précités, caractérisé par le fait que le porte-repère (28) et l'élément de réglage (16) sont réglables l'un par rapport à l'autre.

2. Système de mesure suivant la revendication 1, caractérisé par le fait que le porte-repère (28) est disposé, en tant qu'anneau de coincement, de manière à pouvoir être réglé et fixé dans sa position angulaire dans une gorge trapézoïdale (30) de l'élément de réglage (16).

3. Système de mesure suivant la revendication 1, caractérisé par le fait que le porte-repère est constitué par une rondelle auto-adhésive.

## FIG. 1a

24 25 M    24 25 M    24 25 M

N

32

33

1    16a 28 21    16a 21 28    16a 21 28

## FIG. 1b

1 3 5 19

27
33
16
14
21
18
17
13
12
11

4

2

9
10
11

6

7

8

0 123 018

# FIG.2

# FIG.3a

# FIG.3b